# EUROPÄISCHE PATENTSCHRIFT

(11) **EP 1 833 114 B1**
(45) Veröffentlichungstag und Bekanntmachung des Hinweises auf die Patenterteilung: **24.08.2011**
(21) Anmeldenummer: 06004618.2
(22) Anmeldetag: 07.03.2006
(51) Int. Cl.: H01M 10/06, B32B 27/00, H01M 2/14

(54) **Akkumulator**
Accumulator
Accumulateur

(43) Veröffentlichungstag der Anmeldung: 12.09.2007
(73) Patentinhaber: Hoppecke Technologies GmbH & Co. KG, 08056 Zwickau (DE)
(72) Erfinder: Riegel, Bernhard Dr., 59929 Brilon (DE); Cattaneo, Eduardo Dr., 59929 Brilon-Rösenbeck (DE)
(74) Vertreter: Stenger, Watzke & Ring

(56) Entgegenhaltungen:
- EP-A2- 1 291 940
- US-A- 5 460 900
- US-A1- 2004 151 982
- US-B1- 6 228 525
- ELECTROCHIMICA ACTA, Bd. 9, 1964, Seiten 55-62, XP002402867
- GROISS RENÉ: "Schnelladung und Pulsladung von Bleibatterien" [Online] 16. Mai 2001 (2001-05-16), , UNIVERSITÀT ULM , XP002402868 Gefunden im Internet: URL:http://vts.uni-ulm.de/query/longview.m eta.asp?document_id=621> [gefunden am 2006-10-12] * Seite 120 - Seite 122; Abbildung 55 * * Seite 153 * * Seite 157, Absatz 11.2 - Seite 159, Absatz 11.3 *

## Beschreibung

Die vorliegende Erfindung betrifft einen Akkumulator mit wenigstens einer elektrochemischen Zelle, die zwei durch einen Separator getrennte Elektroden in elektrochemischen Kontakt mit einem Elektrolyten aufweist, die jeweils in elektrischer Verbindung mit einem Polanschluß des Akkumulators stehen. Ferner betrifft die Erfindung ein Verfahren zum Betrieb eines Akkumulators.

Im Stand der Technik sind Akkumulatoren in einer Vielzahl von Anwendungen in Gebrauch, und zwar häufig in Anwendungen, die netzunabhängig, das heißt, unabhängig von einer öffentlichen Energieversorgung, betrieben werden sollen, sowie in Anwendungen, für die eine unterbrechungsfreie Stromversorgung erforderlich ist. Anwendungen ergeben sich insbesondere auch im Traktionsbereich beziehungsweise in Bereichen, in denen erhöhte Anforderungen an die Sicherheit, beispielsweise Explosionsschutz oder dergleichen, gestellt werden. Viele Anwendungen finden sich deshalb auch im Bereich der Lagerhaltung, bei der Lagertransporteinrichtungen wie Gabelstapler und dergleichen mittels elektrischer Energie eines Akkumulators angetrieben werden. Vielfach werden für solche Anwendungen Blei-Säure-Akkumulatoren eingesetzt, wobei als Elektrolyt Schwefelsäure verwendet wird.

Um eine hohe Verfügbarkeit der betriebsbestimmenden Parameter wie Akkumulatorkapazität und dergleichen über die Lebensdauer möglichst unverändert aufrechterhalten zu können, sind bezüglich des Ladens von Akkumulatoren bestimmte Anforderungen zu beachten. Bei Blei-Säure-Akkumulatoren sollte der Ladestrom etwa ein Zehntel des Werts der Akkumulatorkapazität nicht überschreiten. Ein Akkumulator mit einer Kapazität von 100 Ah wird deshalb vorzugsweise mit einem Ladestrom von ca. 20 A geladen, wobei in Abhängigkeit vom Ladezustand und weiterer Parameter mittels moderner Ladegeräte Abweichungen auftreten können. Für die in Frage kommenden Anwendungen ist jedoch die Zeit, die zum Aufladen des Akkumulators erforderlich ist, ein Erschwernis. Entweder erfordert es die Auswechslung von Akkumulatorsätzen, wobei ein entladener Akkumulatorsatz durch einen aufgeladenen ausgetauscht wird, oder es ist erforderlich, die entsprechende Einrichtung beziehungsweise das Fahrzeug für die Dauer der Aufladung des Akkumulators außer Betrieb zu nehmen. Hierdurch entstehen Kosten beziehungsweise Standzeiten, so daß ein Bedarf besteht, diesbezüglich eine Verbesserung zu erreichen.

Versuche, eine schnellere Ladung zu erreichen, finden ihre Grenze darin, daß der Akkumulator eine unzulässige Betriebstemperatur erreicht beziehungsweise einer erhöhten Alterung unterliegt. Durch spezielle Ladeverfahren läßt sich zwar der Einfluß geringfügig reduzieren, aber eine deutliche Verbesserung könnte bislang nicht erreicht werden.

Es ist deshalb die **Aufgabe** der vorliegenden Erfindung, die den Akkumulator beeinträchtigende Wärmeentwicklung zu reduzieren beziehungsweise die Wärmeableitung zu verbessern.

Diese Aufgabe wird vorrichtungsseitig **gelöst** durch die Merkmale des Anspruchs 1, verfahrensseitg durch die Merkmale des Anspruchs 9. Weitere Vorteile und Merkmale ergeben sich aus den Unteransprüchen. Mit Vorteil weisen die Elektroden einen geringeren spezifischen elektrischen Widerstand gegenüber Elektroden des Standes der Technik auf. Der Akkumulator kann Bestandteil einer Energieversorgungseinheit sein, die eine mit Hochstrom ladefähige Batterie, ein Hochstromladegerät sowie eine Batterie-Kontroll- und Überwachungseinheit umfaßt.

Erstmals kann mit der vorliegenden Erfindung erreicht werden, daß bereits an der Quelle der Wärmeentstehung eine Verbesserung erreicht wird. Der Begriff "spezifischer elektrischer Widerstand Leitfähigkeit" bedeutet im Sinne der vorliegenden Beschreibung eine längenbezogenen Leitfähigkeit. Üblicherweise sind die Elektroden eines Blei-Säure-Traktionsakkumulators im wesentlichen aus einem Träger aus Bleiantimonlegierungen mit Bleidioxid und Blei als Aktivmasse gebildet. Die Leitfähigkeit Werte positiven Elektroden von Akkumulatoren des Standes der Technik liegen, abhängig von der Porosität der Aktivmasse zwischen 0,40 und 0,84 S.m/mm².

Mit ca. 3,5 S.m/mm² weisen Bleiantimonlegierungen im Vergleich zu vielen anderen Metallen jedoch eine relativ geringe elektrische Leitfähigkeit auf, die einen entsprechend hohen spezifischen elektrischen Widerstand zur Folge hat. Im Vergleich dazu weisen andere Werkstoffe, wie beispielsweise Silber, Kupfer und dergleichen sowie entsprechende Legierungen hiervon eine deutlich höhere elektrische Leitfähigkeit auf, die etwa um den Faktor 10 höher als die des Bleis ist. Daraus folgt, daß bei Verwendung solcher Werkstoffe bei gleichbleibenden Querschnitt für die Stromführung der spezifische elektrische Widerstand um einen entsprechenden Faktor reduziert werden kann. Da sich die Verlustleistung bekanntermaßen aus dem Widerstand multipliziert mit dem Quadrat des diesen durchfließenden Stroms ergibt, kann die Verlustleistung und damit die erzeugte Wärme um einen entsprechenden Faktor reduziert werden. Soll beispielsweise ein Akkumulator mit einer Kapazität von 100 Ah von 30 % bis auf 80 % innerhalb einer Stunde aufgeladen werden, so wird hierzu ein Strom von mindestens 50 A oder sogar mehr benötigt. Die Verlustleistung würde bei konventioneller Bauart um einen Faktor im Bereich von 15 bis 25 ansteigen. Dies würde bei vorgegebener Bauweise eine thermische Überbeanspruchung des Akkumulators zur Folge haben. Durch Reduzierung des spezifischen elektrischen Widerstands um einen Faktor im Bereich von 10 kann die Verlustleistungszunahme auf einen Wert von 1,5 bis ca. 2,5 reduziert werden. Hierdurch kann ein zulässiger Betriebsbereich des Akkumulators erreicht werden.

Weiterhin wird vorgeschlagen, eine zyklenfeste, leitfähige Aktivmasse zu verwenden. Die Aktivmasse ist üblicherweise der Werkstoff, der auf einem Träger aus einer Bleilegierung aufgebracht wird und den eigentlichen aktiven Bereich der Elektrode darstellt. In der aktiven Masse sind die Stoffe angeordnet, die mit dem Elektrolyten in Wechselwirkung treten und die Eigenschaften der elektrolytischen Zelle wesentlich bestimmen. Bei einem Blei-Schwefelsäure-Akkumulator weist die aktive Masse Blei beziehungsweise Bleidioxid auf. Eine solche Aktivmasse weist eine reduzierte Abschlammung und Sulfatierung auf, wodurch der Alterungsprozeß verzögert wird. Zugleich ist eine verbesserte Massenhaftung durch Verwendung von Additiven zur optimalen Reifung der Aktivmasse vorgesehen. Bei Rohrplatten als Elektroden ist ein optimales Verhältnis zwischen Rohrdurchmesser und Umfang der Gitterseelen beziehungsweise Stege des Gitters (sog. Flatplates) bei gleichbleibenden Querschnitten von circa 2 erforderlich. Ferner wird die Verwendung von Taschenmaterialien mit höherer Säurebenetzbarkeit und geringem spezifischen elektrischen Widerstand vorgeschlagen. Diese Maßnahmen führen in ihrer Zusammenwirkung dazu, daß die auf diese Weise hergestellte Elektrode nicht nur einen niedrigeren spezifischen elektrischen Widerstand als konventionell hergestellte Elektroden aufweisen, sondern auch die Belastbarkeit der Elektrode kann bei hoher Strombeanspruchung erheblich verbessert werden. Außerdem kann mit der Reduzierung des spezifischen elektrischen Widerstands zugleich eine Verbesserung der thermischen Leitfähigkeit erreicht werden, wodurch eine Reduzierung der thermischen Beanspruchung der Elektrode während einer Hochstrombeanspruchung weiter reduziert werden kann.

In einer Weiterbildung wird vorgeschlagen, daß die Elektroden hochleitfähige Bereiche für die Stromab- und Stromzuführung aufweisen. Hierdurch kann eine weitere Reduzierung der Verlustleistung des Akkumulators erreicht werden. Die hochleitfähigen Bereiche können beispielsweise durch Werkstoffe mit erhöhter elektrischer Leitfähigkeit erreicht werden. So können beispielsweise bei Bleigittern die Bereiche für die Stromab- und Stromzuführung mit einer Einlage aus beispielsweise Kupfer und Legierungen hiervon oder dergleichen gebildet sein. Die Gestaltung der Stromab- und Stromzuführbereiche erfolgt vorzugsweise derart, daß sie auf korrosive Wirkungen in der lokalen Atmosphäre um den Akkumulator möglichst wenig oder gar nicht reagieren, beispielsweise indem sie mit einer Blei oder Blei-Zinn Beschichtung versehen sind.

In einer weiteren Ausgestaltung wird vorgeschlagen, daß die Elektroden ein Gitter mit stromab- und stromzuführenden Bereichen aufweisen, die dicht nebeneinander angeordnet sind. Durch die Erhöhung der Anzahl der Stromab- und Stromzuführbereiche kann der spezifische elektrische Widerstand der Elektrode weiter abgesenkt werden. Bekanntermaßen führt die Parallelschaltung von elektrischen Widerständen zu einem geringeren Gesamtwiderstand als der kleinste elektrische Widerstand. Ferner führt diese Ausgestaltung zu einer Verbesserung der Spanungslage der Elektrode.

Weiterhin wird vorgeschlagen, daß die stromab- und stromzuführenden Bereiche einen erhöhten Querschnitt gegenüber dem Gitter aufweisen. Durch den erhöhten Querschnitt kann ebenfalls eine Reduzierung des spezifischen elektrischen Widerstands und damit der Verlustleistung erreicht werden. Gegenüber Stromab- und Stromzuführungen des Stands der Technik, die im wesentlichen hinsichtlich ihrer Abmessungen den Abmessungen der einzelnen Gitterelemente entsprechen, können die Abmessungen gemäß der vorliegenden Erfindung nicht nur hinsichtlich der Breite, sondern auch hinsichtlich ihrer Dicke deutlich erhöht sein. Vorzugsweise sind die Abmessungen in der Dicke so gewählt, wie die Elektroden in ihrer Dicke ausgestaltet sind. Dies kann dazu führen, daß die Stromab- und Stromzuführungen aus der aktiven Massen herausragen können.

In einer Weiterbildung wird vorgeschlagen, daß die stromab- und stromzuführenden Bereiche aus einem Verbundwerkstoff gebildet sind. So können diese Bereiche beispielsweise mit Blei oder einer passivierenden Schicht beschichtet sein, durch die die Korrosion vermieden werden kann. Der Verbund kann zugleich so gewählt werden, daß eine gute Verbindbarkeit mit der aktiven Masse erreicht werden kann.

In einer weiteren Ausgestaltung wird vorgeschlagen, daß der Separator kurzschlußsicher ist. Der Separator weist vorzugsweise hinreichend viele Poren auf, so daß eine hohe Säurediffusion erreicht werden kann, ohne daß der Separator zu Kurzschlüsse durch Bleidendritendurchwachstum neigt. Auf diese Weise kann erreicht werden, daß der Separator einen niedrigen spezifischen Widerstand aufweist und seine Separationsfunktion bei einem hohen Stromdurchsatz gewährleistet werden kann. Die Wasserlektrolyse ist eine wesentliche Wärmequelle beim Ladevorgang. Des weiteren besitzt der Separator die Eigenschaft die Migration der Antimonionen aus der positiven Elektrode zur negativen Elektrode zu unterbinden. Dadurch wird das bekannte Phänomen der Erniedrigung der Wasserstoffüberspannung aufgrund Antimonabscheidung auf der negativen Aktivmasse, die bekannterweise zu erhöhter Wasserstoffentwicklung führt, unterdrückt.

Darüber hinaus wird vorgeschlagen, daß der Separator gegen Oxidation geschützt ist. Gerade im Bereich der Hochstrombeanspruchung besteht die Neigung, daß Sauerstoff, insbesondere während des Ladevorgangs, erzeugt wird. Der Sauerstoff ist aggressiv und führt zur Oxidation der ihm ausgesetzten Zellenkomponente. Dies trifft auch für den Separatoren aus Kunststoff zu, weshalb vorzugsweise ein Separator eingesetzt wird, der möglichst durch gezielte Zutaten oxidationsstabilisiert ist, daß heißt chemisch resistent ist.

Der Separator besteht vorzugsweise aus Polyethylen, Phenolharz, Polyvinylchlorid dotiert mit Additiven, die die zuvor beschriebenen Eigenschaften gewährleisten.

In einer vorteilhaften Weiterbildung wird vorgeschlagen, daß die elektrische Verbindung und/oder der Polanschluß einen elektrisch gut leitenden Werkstoff aufweisen. Der Werkstoff kann beispielsweise Kupfer oder dergleichen sowie auch Legierungen hiervon enthalten. Besonders vorteilhaft sind solche Werkstoffe als Einlage oder Kern zu konventionellen elektrischen Verbindungen und/oder Polanschlüssen vorgesehen, wobei beispielsweise der Kern durch einen solchen Werkstoff gebildet sein kann. Es kann beispielsweise vorgesehen sein, daß im Anschlußbereich beispielsweise der Polanschluß nur aus einem solchen Werkstoff, wie zuvor aufgeführt, gebildet ist. So kann beispielsweise ein Polanschluß im Anschlußbereich aus Kupfer gebildet sein, welches mit entsprechenden Klemmen gut kontaktierbar ist. Darüber hinaus kann die Form vom Polanschluß beziehungsweise der zugehörigen Anschlußklemme so gewählt sein, daß ein Übergangswiderstand einerseits zur Führung eines großen Gesamtstroms geeignet ist und andererseits einen niedrigen Übergangswiderstand zwischen Polanschluß und Klemme erreichbar ist. So kann der Polanschluß beispielsweise eine Oberfläche aufweisen, die eine gewisse Elastizität oder Verformbarkeit aufweist, und auf diese Weise an die genaue Kontur der Anschlußklemme angepaßt werden kann.

Es wird darüber hinaus vorgeschlagen, daß die elektrische Verbindung und/oder der Polanschluß einen großen elektrischen Querschnitt aufweisen. Hierdurch kann der elektrische Widerstand reduziert werden sowie auch ein kleinerer Übergangswiderstand erreicht werden. Ein großer elektrischer Querschnitt kann darüber hinaus zu einer guten thermischen Leitfähigkeit führen, wodurch Wärme aus dem Akkumulator über die Polanschlüsse abgeführt werden kann. Polanschlüsse des Stands der Technik weisen oftmals eine Zylinderform auf mit einem Durchmesser von etwa 2 cm. Für die vorliegende Ausgestaltung weist der Polanschluß einen Durchmesser von etwa 2,5 cm oder mehr auf, insbesondere 3 cm oder mehr. Um die Kontaktfläche weiter zu vergrößern, kann ferner die Höhe größer als 2,5, insbesondere größer als 3 cm gewählt sein.

In einer weiteren vorteilhaften Ausgestaltung wird vorgeschlagen, daß der Akkumulator ein Gehäuse aus Kunststoff aufweist. Insbesondere ist der Kunststoff bis zu einer Temperatur von 150° C, vorzugsweise jedoch bis zu einer Temperatur von 180° C für den bestimmungsgemäßen Betrieb als Akkumulatorgehäuse geeignet. Auf diese Weise kann ein robustes, hochtemperaturgeeignetes Gehäuse erreicht werden. Für hohe Temperaturen kann das Gehäuse beispielsweise aus Moplen^{®}, Stamilan^{®} und Metocene^{®} oder dergleichen gebildet sein.

In einer vorteilhaften Weiterbildung wird vorgeschlagen, daß das Gehäuse des Akkumulators Kühlbereiche aufweist. So kann das Gehäuse beispielsweise an seinen Außenbereichen Rippen aufweisen, über die Wärme aus dem Akkumulator an eine Umgebungsatmosphäre abgegeben werden kann. Darüber hinaus kann vorgesehen sein, daß beispielsweise den Akkumulator senkrecht durchragende Öffnungen zwischen den Zellen vorgesehen sind, um eine Vergleichmäßigung des Temperaturprofils des Akkumulators erreichen zu können. Durch die Öffnungen kann ein Kühlmittel strömen, welches den Akkumulator im Innenbereich zwischen den Zellen kühlen kann. Auch der Deckel kann zur Kühlung ausgebildet sein, indem er beispielsweise eine Rippenstruktur oder dergleichen aufweist. Zusätzlich kann eine Zwangsbelüftung beispielsweise mittels eines Lüfters oder dergleichen vorgesehen sein.

Um die Kühlung des Akkumulators weiter zu verbessern, wird vorgeschlagen, daß der Akkumulator Mittel zur Elektrolytumwälzung aufweist. Auf diese Weise kann der Elektrolyt zugleich als Kühlmittel für den Akkumulator-verwendet werden. So kann beispielsweise vorgesehen sein, daß der Elektrolyt derart umgepumpt wird, daß er Wärme von inneren Bereichen der Zellen des Akkumulators zu Randbereichen führt, die gekühlt werden können. Darüber hinaus kann eine Homogenisierung des Elektrolyten während der Strombeanspruchung, insbesondere beim Laden erreicht werden, wodurch ferner die Gasung, das heißt, die Erzeugung von Sauerstoff und Wasserstoff bei einem Schwefelsäureelektrolyten, reduziert werden kann. Die Wasserzersetzung ist einer der Wärmeentwicklungsquellen in dem Akkumulator.

In einer Weiterbildung wird vorgeschlagen, daß der Akkumulator einen vom Elektrolyten durchströmbaren Wärmetauscher aufweist. Hierdurch kann die Kühlleistung mittels des Elektrolyten erhöht werden. Der Elektrolyt kann zur Kühlung der Elektroden und auch weiterer Bauelemente wie dem Separator und dergleichen verwendet werden. Der Wärmetauscher kann beispielsweise an einer Gehäusewand des Akkumulators angeordnet sein, wobei eine Kühlfläche durch das Gehäuse nach außen ragen kann. Eine effektive Kühlung des Akkumulators durch den Elektrolyten kann erreicht werden.

Gemäß einer weiteren Ausgestaltung weist der Akkumulator eine erhöhte Wärmeleitfähigkeit auf. Durch die Verwendung wärmeleitfähiger Kunststoffe kann die Wärmeleitfähigkeit verbessert werden. Weiterhin kann beispielsweise durch bereichsweise wärmeleitfähige Einlagen aus Metall im Gehäuse eine Verbesserung der Wärmeleitfähigkeit erreicht werden, wie beispielsweise Kupfer und dergleichen. So kann beispielsweise vorgesehen sein, daß die Trennwände zwischen den einzelnen Zellen des Akkumulators aus einem Material mit hoher thermischer Leitfähigkeit bestehen beziehungsweise einem geeigneten Verbundwerkstoff. Dies ermöglicht es insbesondere aus dem Inneren des Akkumulators im Bereich zwischen den Zellen Wärme nach außen abzuleiten, wodurch eine zusätzliche thermische Stabilisierung des Akkumulators erreicht werden kann.

In einer weiteren Ausgestaltung wird vorgeschlagen, daß der Akkumulator ein Wassernachfüllsystem aufweist. Das Nachfüllsystem für Wasser kann vorzugsweise die Pegelstände des Elektrolyten in den Zellen an thermisch kritischen Zellen ermitteln und bedarfsgerecht Wasser zuführen. Auf diese Weise können die Betriebsbedingungen jeder Zelle des Akkumulators während des bestimmungsgemäßen Betriebs konstant gehalten werden. Darüber hinaus kann eine erhöhte Zuverlässigkeit bei reduzierter Wartung erreicht werden, insbesondere weil die vorgesehenen Betriebsbedingungen üblicherweise bei konventionellen Akkumulatoren einen erhöhten Wasserverbrauch zur Folge haben. Bei der vorgesehenen Anwendung ist es jedoch wünschenswert, daß der Akkumulator über viele Betriebszyklen möglichst wartungsfrei gefahren werden kann. Mit dem Wassernachfüllsystem kann dieses Ziel erreicht werden. Durch das Batterie Management System wird gewährleistet, dass das Laden mit hohen Strömen nur bei Säurepegeln im zulässigen Bereich stattfindet.

Das Schnellladeverfahren erfordert eine ständige Überwachung der Kenngrößen des Akkumulators. Dies erfolgt durch den Einsatz einer Batterie-Kontroll und Überwachungseinheit. Die Einheit ist ausgestattet mit Sensoren zur Ermittlung der Betriebsparameter der Batterie (Strom, Gesamtspannung, Temperatur, Elektrolytstand). Die Daten werden in der Einheit gespeichert und bewertet, daraus entstehen die Größen die der Zustand des Akkumulators beschreiben, i. e. Ladezustand als Funktion der Temperatur, die ebenfalls temperaturabhängige maximale Ladestrom, mittlerer innerer Widerstand der Zellen etc. die verwendete Ladekennlinie resultiert aus der Wertung dieser Zustandsparameter. Kritische Betriebszustände werden durch optische bzw. akustische Alarmsignale angezeigt, und können darüber hinaus das Abbrechen des Schnellladeregimes veranlassen wobei das Weiterladen konventionell fortgesetzt wird (IU Verfahren mit 20 A/100 Ah maximaler Strom).

Aus den bewerteten Kerngrößen erfolgt per bezogen auf dem Zustand der Batterie höchstmöglich verträgliche Ladestrom. Dabei werden Werte zwischen 60 bis 100 Ah/100 Ah gewählt.

Ferner registriert die Batterie-Kontroll und Überwachungseinheit die Häufigkeit der Signale aus dem Wassemachfüllsystem, i.e. gespeichert wird wie oft ist es nötig die Zellen mit Wasser nachzufüllen.

Im Zusammenhang mit dem gespeicherten Betriebsparameter wird ein Status der Alterungszustand des Akkumulators ermittelt.

Gemäß einer weiteren vorteilhaften Ausgestaltung weist der Akkumulator eine Entgasungseinheit auf. Die Entgasungseinheit ermöglicht es, entstehende Gase wie Wasserstoff, Sauerstoff oder dergleichen sicher aus den Zellen des Akkumulators abzuleiten, so daß gefährliche Zustände und Korrosionen vermieden werden können. Darüber hinaus kann die Entgasungseinheit beispielsweise einen Gassensor aufweisen, der in der Lage ist, bei Überschreitung einer bestimmten Gaserzeugung eine Meldung abzusetzen.

Darüber hinaus wird vorgeschlagen, daß die Entgasungseinheit ein Zündhemmelement aufweist. Mit dem Zündhemmelement kann erreicht werden, daß bei der Ableitung zündfähiger Gemische eine mögliche Zündung sich nicht in den Akkumulator beziehungsweise in die Akkumulatorzellen hinein auswirken kann. Eine erhöhte Sicherheit kann erreicht werden. Das Zündhemmelement kann beispielsweise als Fritte ausgebildet sein.

Mit der Erfindung wird ferner ein Verfahren zum Betrieb des Akkumulators vorgeschlagen, wobei der Ladezustand in einem Bereich von etwa 20 % bis 70 % gesteuert wird. Es hat sich herausgestellt, daß in diesem Bereich eine Hochstrombelastung des Akkumulators mit geringeren Nachteilen verbunden ist, als in den übrigen Bereichen. Durch diese Einschränkung kann die Hochstromladeeffizienz optimiert werden, da bei Ladezuständen unterhalb 20% das Laden durch den hohen inneren Widerstand (oberhalb 2,5 mOhm) der Zellen beeinträchtigt wird und oberhalb 70% Ladezustand das Laden mit Strömen größer 50 A/100 Ah zu Klemmenspannungen oberhalb 2,5 Volts pro Zelle führen. Die Folgen sind niedrige Ladeeffizienz, Wasserverlust gekoppelt mit gefährlicher Wasserstoffentwicklung durch Elektrolyse und Wärmeentwicklung.

In einer Weiterbildung wird vorgeschlagen, daß die Strombeanspruchung gepulst wird. Durch die gepulste Strombeanspruchung kann die hochkonzentrierte Schwefelsäure in den Pausen von den Poren der Elektroden in den Raum Zwischenplatten reindiffundieren und die negative Folgen der hohen Elektrodenpolarisationen während des Hochstromladens minimiert werden. Die Strompulse enthalten vorzugsweise nicht nur Ladepulse, sondern sie können darüber hinaus auch entsprechend Entladepulse aufweisen. Dabei ergibt sich die Ladung aus dem Verhältnis und dem Energieinhalt der einzelnen Strompulse. Eine weitere Verbesserung des Wirkungsgrads bezüglich der Strombeanspruchung kann erreicht werden.

In einer Weiterbildung wird vorgeschlagen, daß der Akkumulator gekühlt wird. Dies ermöglicht es, einen sicheren Betriebszustand zu erreichen. Hierzu kann beispielsweise vorgesehen sein, daß der Akkumulator mittels eines Fluids, wie zum Beispiel Luft oder Wasser gekühlt wird, die beispielsweise von einer Pumpe oder einem Lüfter angetrieben ist.

Darüber hinaus wird vorgeschlagen, daß der Elektrolyt umgewälzt wird. Dies ermöglicht eine effizientere Ladung beziehungsweise Entladung, da die Elektrolytverteilung in der Zelle während der Beanspruchung des Akkumulators weitgehend homogen gehalten werden kann, d.h. die beeinträchtigende Wirkung von Säureschichtungen wird aufgehoben. Darüber hinaus wird das Laden mit geringeren Ladefaktoren möglich, d. h. eine Minimierung der Ratio zwischen geladene und entnommene Kapazität und somit eine Reduzierung der Knallgasbildung während des Ladevorgangs.

Die Elektrolytumwälzung leistet dazu einen wichtigen Beitrag zur Temperaturkontrolle der Einzelzellen des Akkumulators. Auf diese Weise kann mit einfachen Mitteln eine zusätzliche Kühlung des Akkumulators erreicht werden. Darüber hinaus erlaubt die Verwendung des Elektrolyten zur Kühlung auch Innenbereiche der Zellen und des Akkumulators insgesamt einer Kühlung zugänglich zu machen, wobei in Abhängigkeit des Umwälzens eine entsprechende Kühlleistung bereitgestellt werden kann.

In einer Weiterbildung wird vorgeschlagen, daß zur Kühlung der Polanschluß verwendet wird. Dies ermöglicht es, eine zusätzliche Kühlwirkung bereitzustellen. Vorzugsweise kann die Kühlung durch den Polanschluß mit der Kühlung durch den Elektrolyten kombiniert sein. Hierdurch kann erreicht werden, daß die Inhomogenität bezüglich der Temperatur im Akkumulator reduziert werden kann. Dies erlaubt es, die Beanspruchung im bestimmungsgemäßen Betrieb des Akkumulators weiter zu erhöhen.

In einer vorteilhaften Weiterbildung wird vorgeschlagen, daß in Abhängigkeit von einer Gaserzeugung und/oder einer Akkumulatortemperatur die Strombeanspruchung eingestellt wird. Hierdurch kann ein erhöhtes Maß an Sicherheit erreicht werden, wobei eine optimale Ladung beziehungsweise Entladung im bestimmungsgemäßen Betrieb bereitgestellt werden kann. Überlastbedingungen, die eine Beschädigung des Akkumulators zur Folge haben könnten, können weitgehend vermieden werden.

Um die Zustände des Akkumulators wie Temperatur, Akkumulatorstrom, Akkumulatorspannung und dergleichen überwachen zu können, wird vorgeschlagen, daß die Strombeanspruchung, die Gaserzeugung und/oder die Akkumulatortemperatur zeitdiskret und/oder kontinuierlich ermittelt werden. So können die Meßerfordernisse an den tatsächlichen Erfordernissen orientiert und der Meßaufwand dahingehend angepaßt werden. Kosten und Bauteile können eingespart werden. So kann beispielsweise vorgesehen sein, daß die unterschiedlichen Sensoren von einer gemeinsamen Auswerteeinheit im Zeitmultiplex erfaßt und ausgewertet werden. So ist lediglich eine einzige Auswerteeinheit für sämtliche Sensoren erforderlich. Bei Bedarf und/oder bei sich schnell ändernden Zustandsgrößen wie der Strombeanspruchung kann auch eine kontinuierliche Erfassung vorgesehen sein. Auf diese Weise kann eine hohe Genauigkeit der Erfassung erreicht werden.

Darüber hinaus wird vorgeschlagen, daß als Strombeanspruchung ein Ladestrom verwendet wird. Dies ist insbesondere für den Fall der Schnellladung mit hohem Strom von Vorteil, der möglichst hoch gewählt werden soll, damit eine geringe Standzeit erreicht werden kann. In dieser Ausgestaltung ist der Ladestrom erheblich höher als der bestimmungsgemäße Entladestrom. Solche Anwendungen finden sich beispielsweise im Traktionsbereich oder dergleichen. Hier kann eine deutliche Reduzierung der Standzeit erreicht werden, wodurch Kosten weiter eingespart werden können. Beispielsweise kann vorgesehen sein, daß ein Gabelstapler während Schichtwechsel und/oder Pause an ein Ladegerät angeschlossen wird. Eine hohe Verfügbarkeit kann erreicht werden.

In einer Weiterbildung wird vorgeschlagen, daß dem Elektrolyten Wasser zugeführt wird. Hierdurch kann erreicht werden, daß eine Vergrößerung der Wartungsintervalle vorgesehen werden kann. So kann ein Permanentbetrieb des Akkumulators erreicht werden. Vorzugsweise erfolgt die Zuführung von Wasser automatische aufgrund einer Pegelüberwachung des Elektrolyten. Darüber hinaus kann vorgesehen sein, daß der Pegel beziehungsweise der Wasserverbrauch an eine Zentrale übermittelt wird. Hierdurch kann beispielsweise ein Alterungszustand des Akkumulators ermittelt werden. Darüber hinaus erlaubt diese Ausgestaltung große Wartungsintervalle, so daß Kosten für die Wartung reduziert werden können.

In einer weiteren Ausgestaltung wird vorgeschlagen, daß entstehendes Gas abgeführt wird. Hierdurch kann nicht nur eine Druckentlastung des Akkumulators beziehungsweise der einzelnen Zellen erreicht werden, sondern auch die Menge des möglicherweise explosiven Gasgemisches kann reduziert werden. Eine erhöhte Sicherheit kann erreicht werden. Für die Gasabführung können separate Gaskanäle vorgesehen sein, die das Gas aus den einzelnen Zellen in bestimmungsgemäßer Weise aus dem Akkumulator ableiten. Gerade bei der Hochstrombeanspruchung des Akkumulators besteht die Neigung zur Erzeugung hoher Gasmengen. Die Abführung von Gas vermeidet darüber hinaus den Nachteil, daß im Akkumulator beziehungsweise in den einzelnen Zellen ein Gasdruck aufgebaut wird, der nicht nur das Gehäuse, sondern auch die Funktion der einzelnen Zellen beeinträchtigen kann. Die Zuverlässigkeit kann weiter erhöht werden.

Weitere Vorteile und Merkmale sind der folgenden Beschreibung eines Ausführungsbeispiels zu entnehmen. Gleiche Bauteile sind mit einheitlichen Bezugszeichen versehen. Das Ausführungsbeispiel dient lediglich der Erläuterung der Erfindung und ist für diese nicht beschränkend. Es zeigen:
- Fig. 1: schematisch eine Schnittansicht durch eine erfindungsgemäße Zelle eines Akkumulators,
- Fig. 2: eine Gitterstruktur für eine positive Elektrode, bevor die aktive Masse aufgebracht wird und
- Fig. 3: einen Schnitt durch die in Fig. 2 dargestellte Gitterstruktur entlang einer Linie III-III.

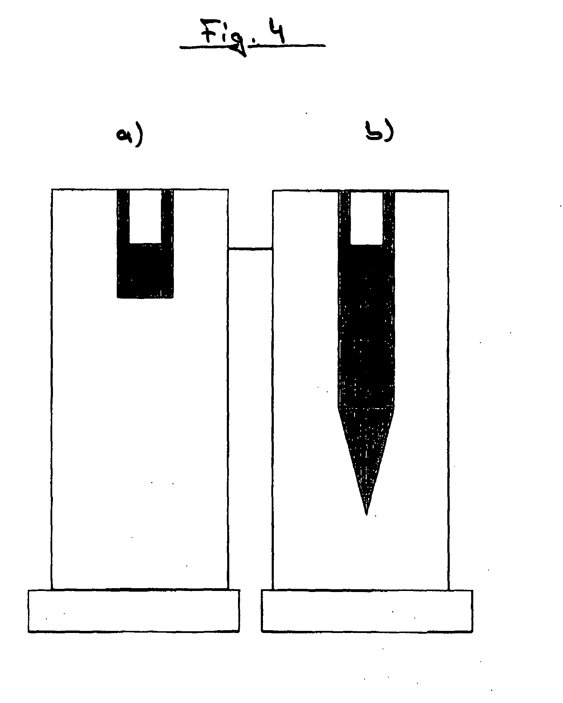

- Fig. 4: einen Pol mit Poleinlage a. Stand der Technik b. Pol mit überdimensionierter Poleinlage aus einem hochleitfähigen Werkstoff.

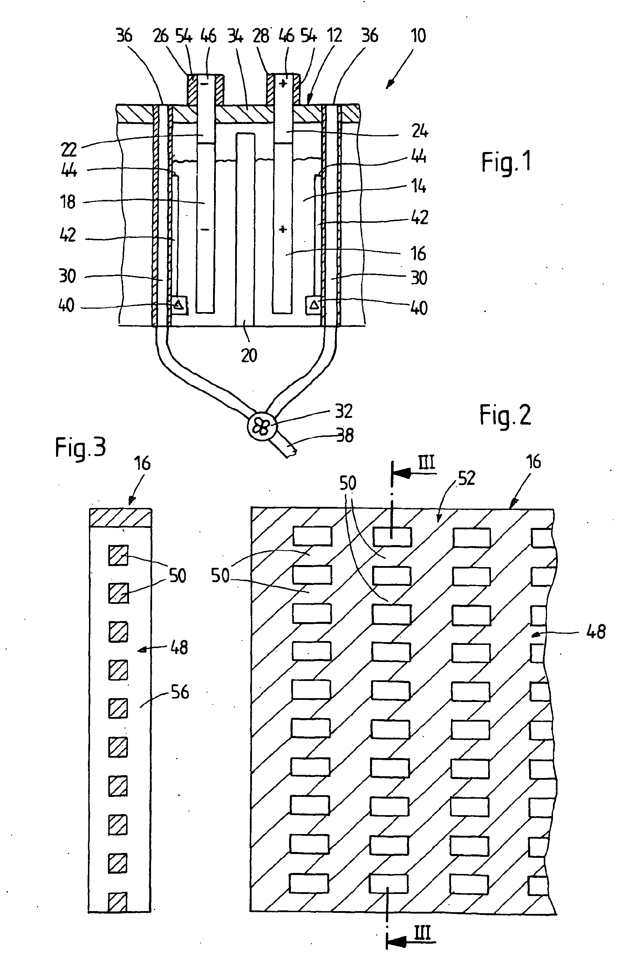

In Fig. 1 ist eine Zelle 12 des erfindungsgemäßen Akkumulators 10 ausgeschnitten in Schnittansicht dargestellt. Die Zelle weist einen Elektrolyten 14, hier Schwefelsäure, auf, in den eine positive Elektrode 16 sowie eine negative Elektrode 18 in eingetauchter Weise festgelegt sind. Zwischen den Elektroden ist ein Separator 20 angeordnet. Der Separator ist aus einem kurzschlußfesten Material gebildet.

Die Elektroden 16, 18 sind elektrisch leitend mit elektrischen Verbindungen 22, 24 verbunden, die durch einen Deckel 34 des Akkumulators 10 durchragen. Auf dem Deckel 34 sind außenseitig Polanschlüsse 26 beziehungsweise 28 vorgesehen, die mit den elektrischen Verbindungen 22, 24 in Kontakt stehen. Die elektrischen Verbindungen 22, 24 sind vorliegend aus Kupfer gebildet, welches mit einer Schicht aus Blei umgeben ist, um der korrosiven Einwirkung von Schwefelsäure zu widerstehen. Aufgrund der mehr als zehnfach höheren elektrischen Leitfähigkeit von Kupfer gegenüber Blei trägt das Kupfer im wesentlichen zur elektrischen Leitfähigkeit zwischen den Elektroden 16, 18 und den Polanschlüssen 26, 28 bei. Aufgrund dieser Tatsache reduziert sich der elektrische Widerstand entsprechend und damit auch die Verlustleistung. Der Polanschluß 26, 28 ist mit einem Kern 46 versehen, der in der vorliegenden Ausgestaltung durch die Fortsetzung der elektrischen Verbindungen 22, 24 gebildet ist. Die Polanschlüsse 26, 28 weisen darüber hinaus jeweils eine Messinghülse 54 auf, die zur Kontaktierung durch eine entsprechende Polklemme vorgesehen ist. Die Hülse 54 ist mittels Löten an dem Kern 46 festgelegt. Die Hülse 46 ist bezüglich ihrer Oberfläche derart gestaltet, daß sie sich geringfügig an die Kontur der nicht dargestellten Klemme anpassen kann. Auf diese Weise wird eine große Kontaktfläche und somit ein geringer Übergangswiderstand zwischen der Klemme und der Hülse 54 beziehungsweise dem Polanschluß 26, 28 erreicht.

Aus Fig. 1 ist ferner ein Belüftungssystem ersichtlich, welches durch einen Ansaugkanal 38 für Luft, einem Ventilator 32, nicht weiter bezeichneten Zuführleitungen sowie Kanäle 30 in den Trennwänden zwischen den Zellen gebildet, wobei die Kanäle 30 in Öffnungen 36 des Deckels 34 münden. In einem nicht näher dargestellten Ansaugbereich wird mittels des Ventilators 32 über den Ansaugkanal 38 Kühlluft angesaugt und durch die Kanäle 30 durchgeführt. Die Kühlluft nimmt Wärme über die Wände der Zelle auf und führt diese durch die Öffnungen 36 im Deckel 34 an die Umgebung ab.

Aus Fig. 1 ist ferner ersichtlich, daß der Elektrolyt 14 umgewälzt wird. Hierzu sind im Bereich von jeder Elektrode 18, 16 Pumpen 40 vorgesehen, die in einem unteren Bereich der Zelle 12 angeordnet sind. Die Pumpen 40 saugen den Elektrolyten 14 direkt im unteren Bereich an und fördern ihn durch einen Kanal 42 jeweils in einen oberen Bereich durch die Öffnung 44 des Kanals 42. Hierdurch wird nicht nur eine Homogenisierung des Elektrolyten 14 hinsichtlich seiner Wichte erreicht, sondern der Elektrolyt 14 dient zugleich als Kühlmittel, indem der geförderte Elektrolyt über den Kanal 42, der in thermischer Verbindung mit dem Kanal 30 steht, Wärme an die Luft im Kanal 30 abgibt. Auf diese Weise kann Verlustenergie der Zelle zuverlässig und effektiv abgeführt werden. Eine weitere Leistungssteigerung der Zelle 12 kann erreicht werden.

Aber auch die Elektroden 16, 18 sind hinsichtlich ihrer elektrischen und thermischen Anforderungen optimiert. Beispielhaft wird dies an der Elektrode 16 in den Fign. 2 und 3 erläutert. Im Prinzip gelten dieselben Randbedingungen auch für Elektroden 18, wobei aufgrund der unterschiedlichen Polarität die elektrolytisch wirksamen Stoffe variieren.

In Fig. 2 ist eine Gitterstruktur 48 der Elektrode 16 dargestellt, die senkrechte Bereiche für die Stromab- und Stromzufuhr aufweisen, die durch waagerechte Stege 50 miteinander verbunden sind. Aus der Zeichnung ergibt sich bereits, daß die stromab- und stromzuführenden Bereiche 52 erheblich breiter als die Stege 50 ausgebildet sind. Dies resultiert daher, daß die Bereiche 52 einer deutlich höheren Strombelastung ausgesetzt sind. Um die Strombelastung weiter zu vergrößern, ist die Anzahl der Bereiche 52 gegenüber standardgemäßen Gitterstrukturen verdoppelt. Auf diese Weise kann der elektrische Widerstand deutlich reduziert werden, wodurch sich auch die durch eine Strombelastung verursachte Wärme erheblich reduziert.

Fig. 3 zeigt einen Schnitt durch das Gitter 48 in Fig. 2 entlang einer Linie III-III. Gemäß Fig. 3 sind die stromab- und stromzuführenden Bereiche 52 in ihrer Breite ca. dreimal so breit gewählt, wie die Breite der Stege 50. Auch diese Maßnahme führt dazu, daß der elektrische Widerstand der stromab- und stromzuführenden Bereiche 52 deutlich reduziert ist gegenüber dem Stand der Technik. Der durch die Gitterstruktur 38 gebildete Raum 56 wird mit der aktiven Masse aufgefüllt. In der vorliegenden Ausgestaltung ragen die stromab- und stromzuführenden Bereiche 52 bis an die Oberfläche der mit aktiver Masse aufgefüllten Platte 16. Zur weiteren Verbesserung der thermischen Eigenschaften kann vorgesehen sein, daß die stromab- und stromzuführenden Bereiche 52 zusätzlich mit Kernen bzw. Einlagen aus hochleitfähigen Werkstoffen wie Kupfer, Silber, Aluminium und dergleichen ausgebildet sind. Die großen Querschnitte der stromab- und stromzuführenden Bereiche 52 sowie gegebenenfalls Einlagewerkstoffe führen dazu, daß nicht nur eine hohe elektrische Leitfähigkeit erreicht werden kann, sondern darüber hinaus auch eine hohe thermische Leitfähigkeit. Dies ermöglicht es, in der Zelle 12 erzeugte Wärme über die Elektroden 16, 18, den elektrischen Verbindungen 22, 24 sowie die Polanschlüsse 26, 28 abzuführen. Dazu kann beispielsweise der Pol mit einer Kühlfäche versehen sein, die in der Lage ist, zugeführte Wärme an Umgebungsluft abzugeben. Es kann auch vorgesehen sein, daß gekühlte Klemmen auf die Polanschlüsse 26, 28 aufgesetzt werden, um Wärme abzuführen. In Zusammenwirkung mit einer Elektrolytumwälzung kann über die Oberflächen der stromab- und stromzuführenden Bereiche 52 zusätzlich Wärme an die in den Kanälen 30 geführte Luft abgegeben werden. Diese Ausgestaltung führt insbesondere zur Homogenisierung der Temperatur innerhalb der Zelle und des Akkumulators.

Die vorliegende Beschreibung eines Ausführungsbeispiels ist für die Erfindung nicht beschränkend. So können unterschiedlichste Maßnahmen miteinander kombiniert werden. Einzelne Zellen des Akkumulators können seriell und/oder parallel miteinander verschaltet sein. Die Verbindungselemente sind vorzugsweise für diese elektrischen und thermischen Anforderungen in geeigneter Weise ausgelegt, wie zuvor beschrieben.

### Bezugszeichenliste:

- 10: Akkumulator
- 12: Zelle
- 14: Elektrolyt
- 16: positive Elektrode
- 18: negative Elektrode
- 20: Separator
- 22: elektrische Verbindung
- 24: elektrische Verbindung
- 26: Polanschluß
- 28: Polanschluß
- 30: Kanal
- 32: Ventilator
- 34: Deckel
- 36: Öffnung
- 38: Ansaugkanal
- 40: Pumpe
- 42: Kanal
- 44: Öffnung
- 46: Kern
- 48: Gitterstruktur
- 50: Steg
- 52: stromab-/stromzuführender Bereich
- 54: Hülse
- 56: Raum

## Patentansprüche

1. Akkumulator (10) für einen Traktionsantrieb mit wenigstens einer in einem Gehäuse aus Kunststoff angeordneten elektrochemischen Zelle (12) bestehend aus: einer Mehrzahl in Kontakt mit einem leitfähigen Elektrolyten (14) stehenden, voneinander durch Separatoren (20) getrennten positiven und negativen Elektroden (16, 18), die jeweils über eine elektrische Verbindung (22, 24) mit einem Polanschluß (26, 28) miteinander elektrisch verbunden sind,
**dadurch gekennzeichnet,**
**daß** die elektrische Verbindung (22, 24), der Polanschluß (26, 28) und/oder stromab- und stromzuführende Bereiche mit Kernen beziehungsweise Einlagen aus hochleitfähigen Werkstoffen wie Kupfer, Silber, Aluminium ausgebildet sind, wobei der Akkumulator eine erhöhte Wärmeleitfähigkeit aufweist, zu welchem Zweck der Kunststoff ein wärmeleitfähiger Kunststoff ist.

2. Akkumulator nach Anspruch 1, **gekennzeichnet durch** ein Gehäuse mit einem Kühlbereich, der in der Zelle (12) entwickelte Wärme abführt.

3. Akkumulator nach Anspruch 2, **dadurch gekennzeichnet, daß** das Gehäuse und/oder ein Deckel des Gehäuses Rippen an seinem Außenbereich aufweist.

4. Akkumulator nach einem der vorhergehenden Ansprüche, **gekennzeichnet durch** eine Zwangsbelüftung mittels eines Lüfters.

5. Akkumulator nach einem der vorhergehenden Ansprüche 2 bis 4, **dadurch gekennzeichnet, daß** das Gehäuse aus Kunststoff gebildet ist, der bis zu einer Temperatur von 150 °C, vorzugsweise jedoch bis zu einer Temperatur von 180 °C für den bestimmungsgemäßen Betrieb als Akkumulatorgehäuse geeignet ist.

6. Akkumulator nach einem der vorhergehenden Ansprüche 2 bis 5, **dadurch gekennzeichnet, daß** das Gehäuse wärmeleitfähige Einlagen aus Metall aufweist.

7. Akkumulator nach einem der vorhergehenden Ansprüche, **gekennzeichnet durch** einen vom Elektrolyten (14) durchströmbaren Wärmetauscher.

8. Akkumulator nach einem der vorhergehenden Ansprüche, **dadurch gekennzeichnet, daß** der Polanschluß (26, 28) für das Aufsetzen einer gekühlten Klemme ausgebildet ist.

9. Verfahren zum Betrieb eines Akkumulators mit den Merkmalen nach einem der vorhergehenden Ansprüche, **dadurch gekennzeichnet, daß** der Ladezustand in einem Bereich von etwa 20% bis 70% gehalten wird.

10. Verfahren nach Anspruch 9, **dadurch gekennzeichnet, daß** als Strombeanspruchung ein Ladestrom von maximal 100 A/100 Ah Zellenkapazität verwendet wird.

## Claims

1. An accumulator (10) for a traction drive with at least one electrochemical cell (12) arranged in a casing of plastic, consisting of: a multiplicity of positive and negative electrodes (16, 18), standing in contact with a conducting electrolyte (14), separated from one another by separators (20), which electrodes are in each case electrically connected with one another via an electrical connection (22, 24) with a pole terminal (26, 28),
**characterised in that** the electrical connection (22, 24), the pole terminal (26, 28) and/or current removing and current supplying regions are designed with cores or inserts of high conductivity materials such as copper, silver, aluminium, wherein
the accumulator has an enhanced thermal conductivity, to which end the plastic is a thermally conducting plastic.

2. The accumulator in accordance with Claim 1,
**characterised by** a casing with a cooling region, which removes heat generated in the cell (12).

3. The accumulator in accordance with Claim 2,
**characterised in that** the casing and/or a cover of the casing has ribs on its outer region.

4. The accumulator in accordance with one of the preceding claims,
**characterised by** forced ventilation by means of a fan.

5. The accumulator in accordance with one of the preceding Claims 2 to 4,
**characterised in that** the casing is formed from plastic, which is suitable up to a temperature of 150 °C, preferably however up to a temperature of 180 °C, for the intended operation as an accumulator casing.

6. The accumulator in accordance with one of the preceding Claims 2 to 5,
**characterised in that** the casing has thermally conducting inserts of metal.

7. The accumulator in accordance with one of the preceding claims,
**characterised by** a heat exchanger through which the electrolyte (14) can flow.

8. The accumulator in accordance with one of the preceding claims,
**characterised in that** the pole terminal (26, 28) is designed such that a cooled clamp can be attached to it.

9. A method for the operation of an accumulator with the features in accordance with one of the preceding claims,
**characterised in that** the state of charge is held in a range from approximately 20 % to 70 %.

10. The method in accordance with Claim 9,
**characterised in that** a charging current of maximum 100 A/100 Ah cell capacity is used as a current load.

## Revendications

1. Accumulateur (10) pour entraînement de traction comportant au moins une cellule électrochimique (12) disposée dans un logement en plastique constituée de :
une pluralité d'électrodes (16,18) positives et négatives séparées les unes des autres par des séparateurs (20), étant en contact avec un électrolyte conducteur (14), qui sont respectivement reliées électriquement les unes aux autres par l'intermédiaire d'une liaison électrique (22,24) avec une polarité (26,28),
**caractérisé en ce que**
la liaison électrique (22,24), la polarité (26,28) et/ou les zones amenant et évacuant du courant sont réalisées avec des noyaux respectivement des inserts en matériaux hautement conducteurs comme du cuivre, de l'argent, de l'aluminium, dans lequel l'accumulateur présente une conductivité thermique accrue, à quelle fin le plastique est un plastique conducteur thermiquement.

2. Accumulateur selon la revendication 1, **caractérisé par** un logement avec une zone de refroidissement, qui évacue la chaleur développée dans la cellule (12).

3. Accumulateur selon la revendication 2, **caractérisé en ce que** le logement et/ou un couvercle du logement présente des nervures sur sa zone extérieure.

4. Accumulateur selon une des revendications précédentes, **caractérisé par** une aération forcée au moyen d'un ventilateur.

5. Accumulateur selon une des revendications précédentes 2 à 4, **caractérisé en ce que** le logement est formé en plastique, qui est approprié jusqu'à une température de 150°C, de préférence néanmoins jusqu'à une température de 180°C pour le fonctionnement conforme en tant que logement d'accumulateur.

6. Accumulateur selon une des revendications précédentes 2 à 5, **caractérisé en ce que** le logement présente des inserts thermiquement conducteurs en métal.

7. Accumulateur selon une des revendications précédentes, **caractérisé par** un échangeur thermique pouvant être traversé par un électrolyte (14).

8. Accumulateur selon une des revendications précédentes, **caractérisé en ce que** la polarité (26,28) est réalisée pour l'apposition d'une borne refroidie.

9. Procédé de fonctionnement d'un accumulateur avec les caractéristiques selon une des revendications précédentes, **caractérisé en ce que** l'état de charge est maintenu dans une plage d'environ 20% à 70%.

10. Procédé selon la revendication 9, **caractérisé en ce que** comme sollicitation par du courant un courant de charge d'une capacité de cellule de 100 A/100 Ah au maximum est utilisé.
